(19) **Europäisches Patentamt / European Patent Office / Office européen des brevets**

(11) **EP 2 933 775 B1**

(12) **FASCICULE DE BREVET EUROPEEN**

(45) Date de publication et mention
de la délivrance du brevet:
**28.12.2016 Bulletin 2016/52**

(51) Int Cl.:
***G06T 1/00*** *(2006.01)*

(21) Numéro de dépôt: **15248008.3**

(22) Date de dépôt: **03.04.2015**

(54) **DRONE À VOILURE TOURNANTE MUNI D'UNE CAMÉRA VIDEO DÉLIVRANT DES SÉQUENCES D'IMAGES STABILISÉES**

DREHFLÜGEL-DROHNE, DIE MIT EINER VIDEOKAMERA AUSGERÜSTET IST, DIE STABILISIERTE BILDSEQUENZEN LIEFERT

ROTARY-WING DRONE PROVIDED WITH A VIDEO CAMERA SUPPLYING STABILISED IMAGE SEQUENCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2014 FR 1453416
02.07.2014 FR 1456302**

(43) Date de publication de la demande:
**21.10.2015 Bulletin 2015/43**

(73) Titulaire: **Parrot Drones
75010 Paris (FR)**

(72) Inventeurs:
• **Eline, Pierre
95400 Arnouville Les Gonesse (FR)**
• **Fontvielle, Adrien
75010 PARIS (FR)**

(74) Mandataire: **Dupuis-Latour, Dominique
Bardehle Pagenberg
10, boulevard Haussmann
75009 Paris (FR)**

(56) Documents cités:
**US-A1- 2009 160 957     US-A1- 2013 044 241**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

# Description

L'invention concerne les drones à voilure tournante tels que les quadricoptères et analogues.

Ces drones sont pourvus de rotors multiples entraînés par des moteurs respectifs commandables de manière différenciée afin de piloter le drone en attitude et en vitesse.

Un exemple typique d'un tel drone est l'*AR.Drone 2.0* de Parrot SA, Paris, France, qui est un quadricoptère équipé d'une série de capteurs (accéléromètres, gyromètres trois axes, altimètre), d'une caméra frontale captant une image de la scène vers laquelle est dirigé le drone, et d'une caméra de visée verticale captant une image du terrain survolé.

Les WO 2010/061099 A2 et EP 2 364 757 A1 (Parrot SA) décrivent un tel drone ainsi que son principe de pilotage par l'intermédiaire d'un téléphone ou baladeur multimédia à écran tactile et accéléromètre intégré, par exemple un téléphone cellulaire de type *iPhone* ou une tablette multimedia de type *iPad* (marques déposées de Apple Inc., USA). Ces appareils incorporent les divers organes de contrôle nécessaires à la détection des commandes de pilotage et à l'échange bidirectionnel de données avec le drone via une liaison sans fil de type réseau local *Wi-Fi* (IEEE 802.11) ou *Bluetooth* (marques déposées). Ils sont en outre pourvus d'un écran tactile affichant l'image captée par la caméra frontale du drone, avec en superposition un certain nombre de symboles permettant l'activation de commandes par simple contact du doigt de l'utilisateur sur cet écran tactile.

La caméra video frontale du drone est utilisable pour un pilotage en "mode immersif", c'est-à-dire où l'utilisateur se sert de l'image de la caméra de la même façon que s'il se trouvait lui-même à bord du drone. Elle peut également servir à capter des séquences d'images d'une scène vers laquelle se dirige le drone. L'utilisateur peut ainsi se servir du drone de la même façon que d'une caméra ou d'un caméscope qui, au lieu d'être tenu à la main, serait porté par le drone. Les images recueillies peuvent être enregistrées puis diffusées, mises en ligne sur des sites web d'hébergement de séquences video, envoyées à d'autres internautes, partagées sur des réseaux sociaux, etc.

Ces images étant destinées à être enregistrées et communiquées, il est souhaitable qu'elles présentent le moins de défauts possible, notamment de défauts résultant de mouvements parasites du drone, qui vont provoquer des oscillations et sautillements intempestifs de l'image captée par la caméra.

En particulier, avec la caméra qui pointe dans la direction principale du drone, tout mouvement autour de l'axe de tangage (ou de l'axe de lacet), qui est perpendiculaire à l'axe de la caméra, produira sur l'image des oscillations verticales (respectivement, horizontales) dégradant fortement la lisibilité et la qualité de l'image captée. De même, tout mouvement autour de l'axe de roulis (l'axe de la caméra) provoquera une rotation de l'image dans un sens ou dans l'autre, nuisant à sa lisibilité.

Or, les déplacements d'un drone à voilure tournante tel qu'un quadricoptère, qu'il soit commandé par l'utilisateur ou asservi par un pilote automatique, résultent principalement de mouvements de bascule autour des axes de tangage (déplacements avant/arrière) et de roulis (déplacements gauche/droite), qui sont inhérents au principe même de fonctionnement d'un tel drone.

Plus précisément, si le drone est commandé de manière à s'incliner ou "plonger" vers le bas (inclinaison suivant un angle de tangage), il progressera vers l'avant, avec une vitesse d'autant plus élevée que l'inclinaison sera importante. Inversement, s'il est commandé de manière à se "cabrer" dans le sens opposé, sa vitesse ralentira progressivement puis s'inversera en repartant vers l'arrière. De la même façon, pour une commande d'inclinaison suivant un axe de roulis le drone penchera à droite ou à gauche, provoquant un déplacement linéaire en translation horizontale vers la droite ou vers la gauche.

Tout déplacement linéaire du drone vers l'avant ou vers l'arrière ou sur le côté implique un basculement du drone, et donc un effet correspondant de décalage, de rotation, d'oscillation... de l'image recueillie par la caméra.

Ces perturbations peuvent être acceptables dans une configuration de "pilotage immersif" dans la mesure où elles font partie de l'"expérience utilisateur".

En revanche, s'il s'agit d'utiliser le drone à la manière d'une caméra video mobile pour capter des séquences qui seront enregistrées et restituées ultérieurement, ces mouvements parasites sont extrêmement perturbants, avec sur l'image un horizon désaligné et instable, montant et descendant dans l'image au gré des accélérations et des ralentissements du drone, ainsi que des rotations parasites et autres artefacts divers.

Le EP 2 613 214 A1 (Parrot) décrit un procédé de pilotage d'un drone pour opérer une prise de vue selon un mode sélectionné par l'utilisateur tel que travelling frontal ou latéral, panoramique ou plan grue, définissant une trajectoire à imprimer au drone. Une fois le drone stabilisé sur la trajectoire prescrite, la prise de vue video est activée et la trajectoire est stabilisée par un contrôle en boucle ouverte évitant les oscillations inhérentes à un asservissement avec boucle de rétroaction. Il s'agit toutefois dans ce cas de stabiliser une trajectoire en évitant les oscillations parasites autour d'un point de consigne par modification du fonctionnement des boucles de contrôle d'attitude du drone lorsque le mouvement imposé à celui-ci est un mouvement de translation rectiligne uniforme ou un mouvement de rotation uniforme. Il ne s'agit pas de compenser les déplacements de l'image résultant des mouvements de bascule du drone pendant des phases d'accélération ou de ralentissement lors de déplacements avant/arrière et/ou gauche/droite.

Diverses solutions ont été proposées pour assurer la compensation de tels déplacements dans l'image.

Une solution mécanique consiste à monter la caméra dans un berceau relié au corps du drone par une suspension à la Cardan motorisée et asservie de manière à compenser les mouvements de bascule du drone. Cette solution présente plusieurs avantages, notamment de stabiliser l'image en amont de sa capture, et de permettre une grande amplitude de compensation d'angle. En revanche, elle implique un système mécanique complexe et lourd (ce qui est particulièrement pénalisant pour un objet volant), et l'efficacité de la compensation est limitée par l'accélération maximale et la vitesse des moteurs d'asservissement utilisés.

Une autre technique, dénommée OIS (*Optical Image Stabilization*) consiste à déplacer en temps réel des éléments optiques de l'objectif de la caméra, ou du capteur dans le plan focal. La stabilisation est, ici encore, opérée en amont de la prise de vue, et ce système n'implique qu'un très faible encombrement. En revanche, la conception optique est complexe, et l'amplitude maximale de compensation d'angle est limitée à quelques degrés, avec en outre un temps de réponse suffisant pour compenser les effets d'une prise de vue à main levée, mais trop long pour compenser les mouvements très brusques d'un drone en mouvement.

Enfin, la technique dite EIS (*Electronic Image Stabilization*) consiste à acquérir sur le capteur une zone fixe de plus grande étendue que la zone de capture qui sera utilisée. La compensation est opérée par une translation de la zone de capture sur la zone d'acquisition, en sens contraire du mouvement à compenser, le capteur ne transmettant qu'une sous-partie correspondant à l'image stabilisée. La mise en oeuvre d'une telle compensation est simple. En revanche, l'amplitude de compensation est limitée par le rapport entre la taille de la zone de capture et celle de la zone d'acquisition, c'est-à-dire la taille effective du capteur utilisé. Concrètement, l'amplitude maximale de compensation d'angle est limitée à quelques degrés.

Les articles suivants :

- Miyauchi R et al., "Compact Image Stabilization System Using Camera Posture Information", Journal of Field Robotics, Vol. 25, No 4-5, 2008, pp. 268-283 (2008), et
- Miyauchi R et al., "Development of Omni-Directional Image Stabilization System Using Camera Posture Information", Proceedings of the 2007 IEEE International Conference on Robotics and Biomimetics, Dec. 15-18, 2007, pp.920-925,

proposent d'appliquer une telle technique EIS à l'image captée par une caméra munie d'un objectif à champ hémisphérique de type "*fisheye*", c'est-à-dire couvrant un champ d'environ 180°. L'image brute est acquise en totalité (ce qui est possible en temps réel car il s'agit d'un capteur CCD basse résolution), soumise à un traitement de redressement (pour compenser les distorsions du *fisheye*) et ensuite de fenêtrage dynamique en fonction des mouvements du robot portant la caméra.

L'article de Shiroma N et al., "Compact Image Stabilization System for Small-Sized Humanoid", Proceedings of the 2008 IEEE International Conference on Robotics and Biomimetics, Feb. 21-26, 2009, pp.149-154 décrit une technique comparable de stabilisation électronique de l'image captée par un robot télécommandé, avec les mêmes limitations et inconvénients.

Ces techniques de stabilisation d'image ne sont toutefois possibles que parce que la caméra est une caméra à capteur CCD basse résolution (640 x 480 pixels, soit 0,3 Mpixel). Elles seraient en revanche inapplicables à la stabilisation d'une image utile de qualité HD (1920 x 1080 pixels, soit 2 Mpixel), elle-même fenêtrée sur une image *fisheye* brute de très haute résolution, par exemple celle formée sur un capteur de résolution 14 Mpixel (4608 x 3288 pixels). Dans ces conditions, si l'on transférait la totalité de l'image brute pour traitement, ceci correspondrait à un flux de données de pixel de 14 Mpixel pour chaque image, conduisant à une cadence d'images (*framerate*) de l'ordre de 6 images par seconde (ips) à cette résolution, ce qui serait insuffisant pour une séquence video fluide, nécessitant un *framerate* proche de 30 ips.

De plus, la simple translation d'une zone de l'image n'est pas mathématiquement suffisante pour compenser une rotation de la caméra, car il ne s'agit pas d'une véritable correction du changement de perspective induit par des rotations.

Enfin, il s'agit d'une compensation par post-traitement des données d'images acquises par le capteur, ce qui ne permet pas de compenser certains effets tels que le flou de bougé et le *wobble* (ondulation de l'image, de faible amplitude et haute fréquence, causée par les vibrations des moteurs du drone).

Le but de l'invention est de proposer une nouvelle technique de capture d'image par la caméra d'un drone, notamment de type quadricoptère, qui pallie les inconvénients précités et procure les avantages suivants :

- compatibilité avec la délivrance en temps réel d'images de résolution HD sous forme d'un flux video fluide ;
- grande amplitude de compensation angulaire ;
- possibilité de compenser des déplacements très rapides et de forte accélération ;
- pas d'augmentation de l'encombrement ni du poids des éléments embarqués ;
- grande simplicité de mise en oeuvre ;
- compensation de tous les phénomènes optiques, y compris ceux impliquant un changement de perspective induit par les rotations du drone ;
- compensation des effets d'ondulation de forte amplitude et basse fréquence (*jelly*) et de faible amplitude et haute fréquence (*wobble*).

L'invention propose à cet effet un système applicable à un drone à voilure tournante de type connu par exemple d'après les articles précités de Miyauchi, c'est-à-dire comprenant :

- une caméra, comportant un objectif à champ hémisphérique de type *fisheye* pointant dans une direction fixe par rapport au corps du drone, ainsi qu'un capteur numérique recueillant l'image formée par l'objectif et délivrant des données de pixel brutes ;
- des moyens de traitement d'image, recevant en entrée les données de pixel brutes et délivrant en sortie des données de pixel rectifiées, compensées des distorsions géométriques introduites par l'objectif *fisheye* ;
- des moyens de délivrance en sortie des données de pixel rectifiées, pour transmission à un dispositif d'affichage ou d'enregistrement video ;
- une centrale inertielle, apte à mesurer les angles d'Euler caractérisant l'attitude du drone par rapport à un repère terrestre absolu ; et
- des moyens d'asservissement, recevant en entrée au moins un angle d'Euler délivré par la centrale inertielle, et aptes à fenêtrer les données de pixel délivrées en sortie par les moyens de délivrance en fonction de changements d'attitude du drone détectés par la centrale inertielle.

De façon caractéristique de l'invention :

- le capteur numérique est un capteur à balayage délivrant ligne par ligne lesdites données brutes de pixel ;
- le drone comporte en outre des moyens extracteurs, recevant en entrée un signal de sélection définissant sur l'étendue du capteur la position d'une zone de capture de dimension réduite, et délivrant en sortie lesdites données de pixel brutes, qui correspondent à la zone de capture de dimension réduite ;
- les moyens d'asservissement sont des moyens aptes à modifier de façon dynamique ledit signal de sélection dans un sens opposé de celui d'un changement d'attitude du drone détecté par la centrale inertielle et caractérisé par une variation correspondante dudit au moins un angle d'Euler ; et
- lesdits moyens de traitement d'image reçoivent en entrée les données de pixel brutes délivrées par les moyens extracteurs.

Selon diverses caractéristiques subsidiaires avantageuses :

- les moyens d'asservissement sont aptes à modifier le signal de sélection de manière que les données de pixel délivrées par les moyens extracteurs correspondent à une image centrée sur l'horizon, ou centrée sur une orientation fixe par rapport à l'horizon ;

- la caméra est montée dans le drone de manière que la direction de balayage de trame du capteur numérique soit orientée parallèlement à l'axe de tangage du drone ;
- ledit au moins un angle d'Euler est un angle de tangage du drone, et les moyens d'asservissement sont aptes à modifier le signal de sélection de manière à translater la zone de capture dans une première direction, parallèle à un axe principal du capteur ;
- ledit au moins un angle d'Euler est un angle de lacet du drone, et les moyens d'asservissement sont aptes à modifier le signal de sélection de manière à translater la zone de capture dans une seconde direction, perpendiculaire à ladite première direction ;
- le capteur numérique est un capteur à balayage délivrant les données de pixel ligne par ligne, et les moyens de traitement d'image sont aptes à appliquer à chaque ligne du capteur une correction additionnelle propre à compenser les déplacements relatifs de pixels d'une ligne à la suivante induits par des rotations du drone autour d'un axe de lacet, de tangage et/ou de roulis ;
- pour opérer cette correction additionnelle lorsque la caméra est une caméra de type *rolling shutter* délivrant des données video ligne par ligne, la caméra et les capteurs gyrométriques de la centrale inertielle sont pilotés par une horloge commune, et la fréquence d'acquisition des capteurs gyrométriques est un multiple de la fréquence de délivrance des données video de la caméra ;
- très avantageusement, dans ce dernier cas, il est prévu un circuit matériel apte à comparer le signal délivré par les capteurs gyrométriques avec le signal délivré par la caméra, à déterminer la valeur du déphasage entre ces signaux respectifs; et à appliquer cette valeur de déphasage aux moyens de traitement d'image de manière à déclencher de manière synchrone ladite correction additionnelle appliquée à chaque ligne du capteur pour compenser les déplacements relatifs de pixels d'une ligne à la suivante.

On va maintenant décrire un exemple de réalisation du drone selon l'invention, en référence aux dessins annexés où les mêmes références désignent d'une figure à l'autre des éléments identiques ou fonctionnellement semblables.

La Figure 1 est une vue d'ensemble montrant le drone et l'appareil de télécommande associé permettant son pilotage à distance.
Les Figures 2a et 2b illustrent les modifications des directions de visée de la caméra entraînées par un basculement vers l'avant du drone, par exemple lors d'une phase d'accélération.
La Figure 3 est un schéma par blocs des différents organes de contrôle d'asservissement et de pilotage du drone, ainsi que de correction des déplacements de l'image selon la technique de l'invention.

La Figure 4 est un exemple d'une image formée sur le capteur de la caméra du drone.

La Figure 5 illustre les étapes successives de fenêtrage et de correction des distorsions correspondantes au traitement selon l'invention appliqué à l'image de la Figure 4.

La Figure 6 illustre un autre exemple d'une image d'une scène captée avec la caméra du drone.

La Figure 7 illustre diverses vues qu'il est possible d'extraire de l'image globale de la Figure 6, après fenêtrage et correction des distorsions.

La Figure 8 illustre les déformations apportées à l'image centrale illustrée

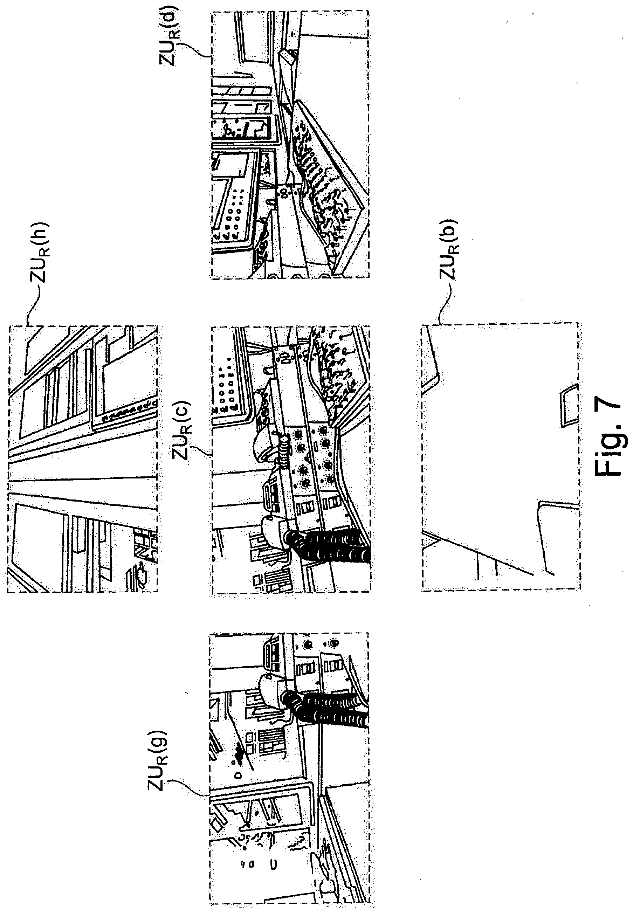

Figure 7 en cas de mouvement de roulis.

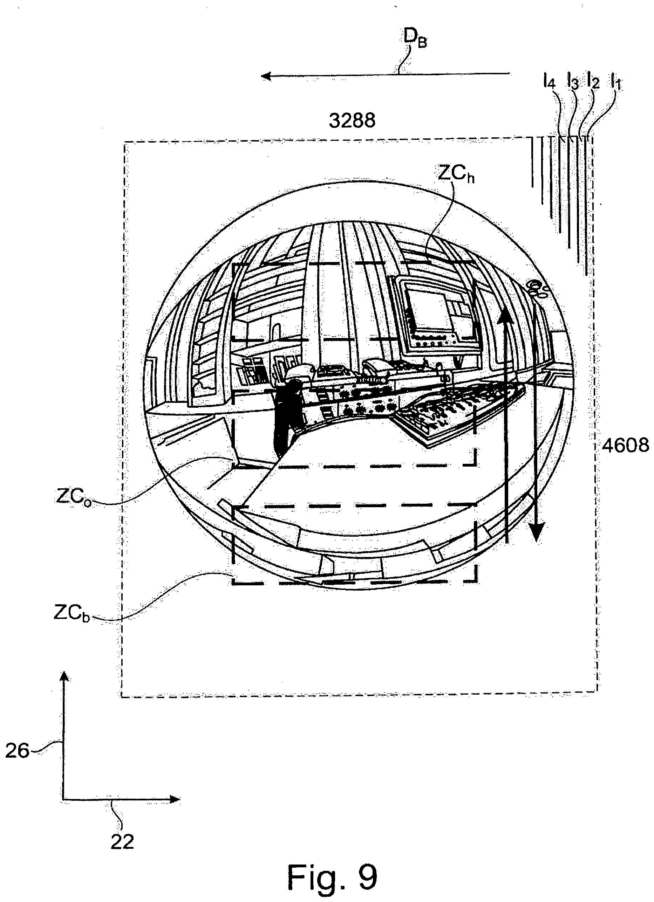

La Figure 9 illustre la manière de positionner le capteur de façon optimale pour compenser de façon efficace des changements d'attitude du drone autour de son axe de tangage.

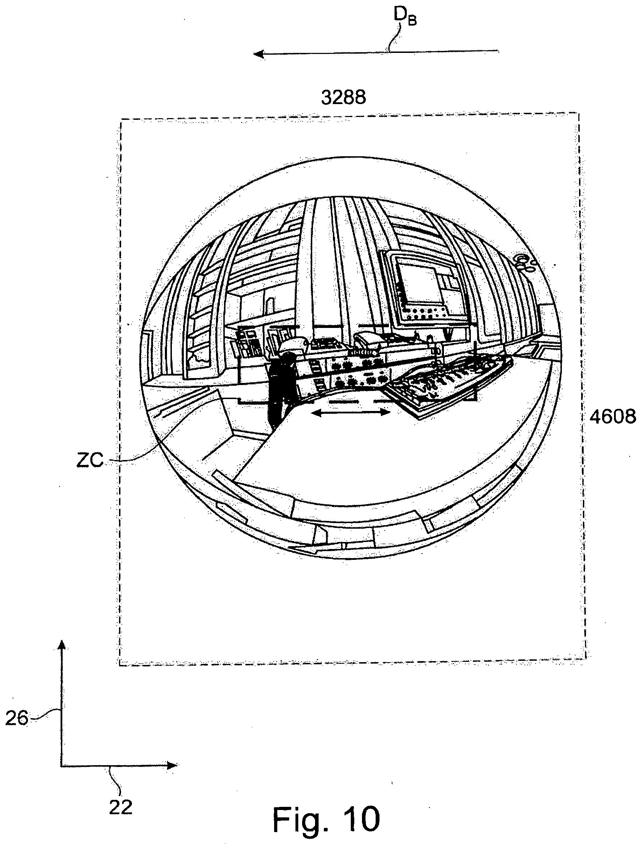

La Figure 10 est homologue de la Figure 9, pour des rotations autour d'un axe de lacet.

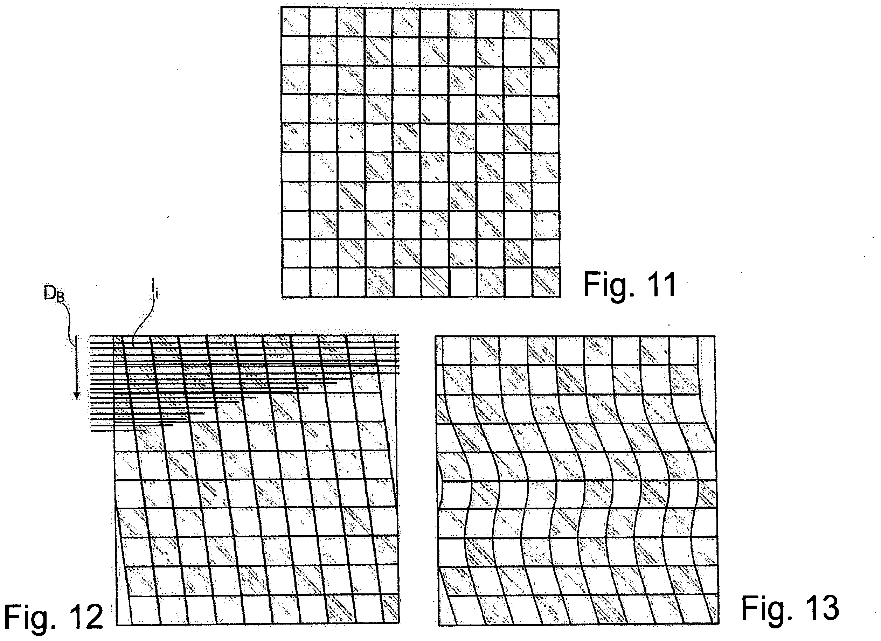

Les Figures 11, 12 et 13 illustrent les déformations de type *wobble* et *jelly* observables sur l'image d'un damier, et qui peuvent être compensées lors de la correction des distorsions selon les enseignements de l'invention.

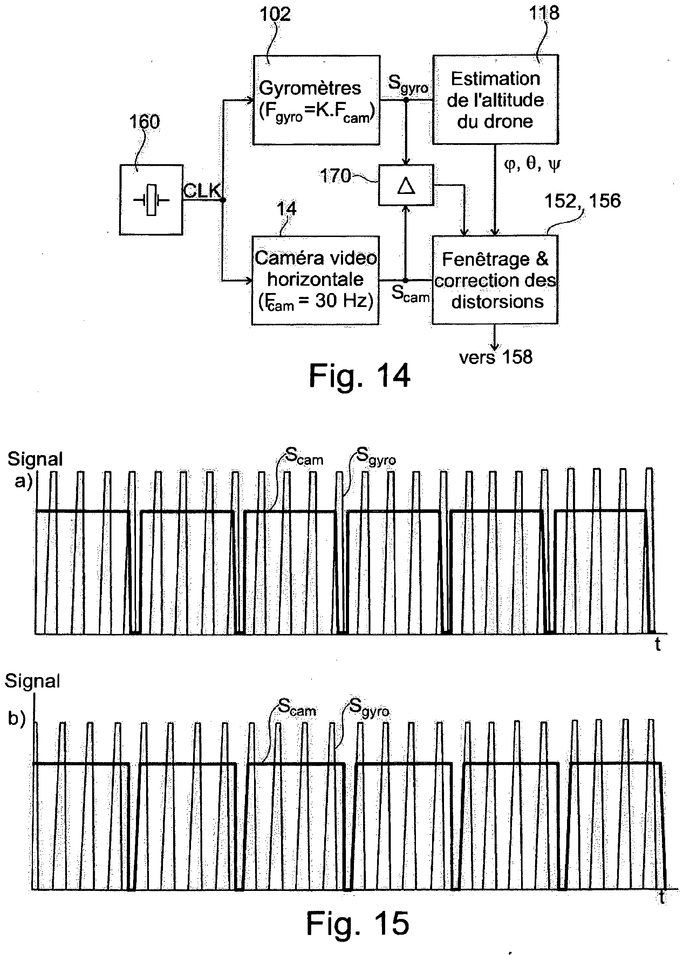

La Figure 14 illustre, sous forme de schéma par blocs, les différents éléments contribuant au mécanisme de synchronisation entre la caméra video et les gyromètres.

Les Figures 15a et 15b sont des chronogrammes montrant la relation temporelle entre les signaux délivrés par la caméra et par les gyromètres, respectivement pour deux drones différents ou pour le même drone à deux moments différents.

On va maintenant décrire un exemple de mise en oeuvre de l'invention.

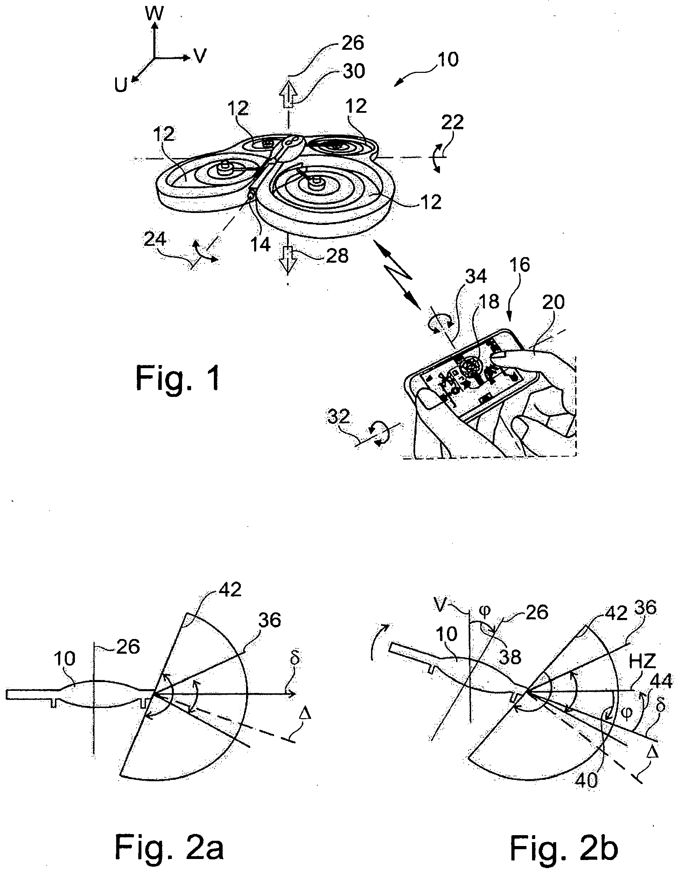

Sur la Figure 1, la référence 10 désigne de façon générale un drone, qui est par exemple un quadricoptère tel que le modèle *AR.Drone 2.0* de Parrot SA, Paris, France, décrit notamment dans les WO 2010/061099 A2 et EP 2 364 757 A1 précités.

Le drone 10 comporte quatre rotors coplanaires 12 dont les moteurs sont pilotés indépendamment par un système intégré de navigation et de contrôle d'attitude. Il est pourvu d'une première caméra 14 à visée frontale permettant d'obtenir une image de la scène vers laquelle est orienté le drone.

Le drone comporte également une seconde caméra à visée verticale (non représentée) pointant vers le bas, apte à capter des images successives du terrain survolé et utilisée notamment pour évaluer la vitesse du drone par rapport au sol. Des capteurs inertiels (accéléromètres et gyromètres) permettent de mesurer avec une certaine précision les vitesses angulaires et les angles d'attitude du drone, c'est-à-dire les angles d'Euler (tangage $\varphi$, roulis $\theta$ et lacet $\psi$) décrivant l'inclinaison du drone par rapport à un plan horizontal d'un repère terrestre fixe, étant entendu que les deux composantes longitudinale et transversale de la vitesse horizontale sont intimement liées à l'inclinaison suivant les deux axes respectifs de tangage et de roulis. Un télémètre à ultrasons disposé sous le drone fournit par ailleurs une mesure de l'altitude par rapport au sol.

Le drone 10 est piloté par un appareil de télécommande distant 16 pourvu d'un écran tactile 18 affichant l'image embarquée par la caméra frontale 14, avec en superposition un certain nombre de symboles permettant l'activation de commandes de pilotage par simple contact du doigt 20 d'un utilisateur sur l'écran tactile 18. L'appareil 16 est pourvu de moyens de liaison radio avec le drone, par exemple de type réseau local *Wi-Fi* (IEEE 802.11), pour l'échange bidirectionnel de données du drone 10 vers l'appareil 16, notamment pour la transmission de l'image captée par la caméra 14, et de l'appareil 16 vers le drone 10 pour l'envoi de commandes de pilotage.

L'appareil de télécommande 16 est également pourvu de capteurs d'inclinaison permettant de contrôler l'attitude du drone en imprimant à l'appareil des inclinaisons correspondantes selon des axes de roulis et de tangage (on pourra se référer au WO 2010/061099 A2 précité pour plus de détails sur ces aspects du système). Le pilotage du drone 10 consiste à faire évoluer celui-ci par :

a) rotation autour d'un axe de tangage 22, pour le faire avancer ou reculer ;

b) rotation autour d'un axe de roulis 24, pour le décaler vers la droite ou vers la gauche ;

c) rotation autour d'un axe de lacet 26, pour faire pivoter vers la droite ou vers la gauche l'axe principal du drone - et donc aussi la direction de pointage de la caméra frontale 14 ; et

d) translation vers le bas 28 ou vers le haut 30 par changement du régime des gaz, de manière à respectivement réduire ou augmenter l'altitude du drone.

Lorsque ces commandes de pilotage sont appliquées par l'utilisateur à partir de l'appareil de télécommande 16, les commandes a) et b) de pivotement autour des axes de tangage 22 et de roulis 24 sont obtenues par des inclinaisons de l'appareil 16 respectivement autour de son axe longitudinal 32 et de son axe transversal 34 : par exemple, pour faire avancer le drone il suffit d'incliner l'appareil de télécommande 16 vers l'avant en le penchant autour de l'axe 32, pour le déporter à droite il suffit d'incliner l'appareil de télécommande 16 en le penchant autour de l'axe 34 vers la droite, etc. Les commandes c) et d), quant à elles, résultent d'actions appliquées par contact du doigt 20 de l'utilisateur sur des zones spécifiques correspondantes de l'écran tactile 18.

Le drone possède également un système automatique et autonome de stabilisation en vol stationnaire, activé notamment dès que l'utilisateur retire son doigt de l'écran tactile de l'appareil, ou automatiquement à la fin de la phase de décollage, ou encore en cas d'interruption de la liaison radio entre l'appareil et le drone. Le drone passe alors à un état de sustentation où il sera immobilisé et stabilisé automatiquement dans cette position fixe, sans aucune intervention de l'utilisateur.

La Figure 2a illustre schématiquement, de profil, l'attitude du drone lorsque celui-ci est immobile, dans un état de sustentation.

On a schématisé en 36 le champ couvert par une caméra frontale 14 de type conventionnel, par exemple une caméra couvrant un champ de 54° et dont l'axe de vision δ est centré sur l'horizon.

Si, comme illustré Figure 2b, le drone progresse vers l'avant avec une vitesse horizontale non nulle, par conception l'axe 26 du drone sera incliné vers l'avant d'un angle φ (angle de tangage) par rapport à la verticale V. Cette inclinaison vers l'avant, schématisée par la flèche 38, implique une inclinaison de même valeur, schématisée par la flèche 40, de l'axe δ de la caméra par rapport au plan de l'horizon HZ. On comprend ainsi qu'au fil des évolutions du drone, de ses accélérations, ralentissements .... l'axe δ oscille en permanence autour de la direction de l'horizon HZ, qui se traduiront sur l'image captée par des mouvements d'oscillation permanents vers le haut et vers le bas.

De façon comparable, si le drone se décale vers la droite ou vers la gauche, ce mouvement s'accompagnera d'un pivotement autour de l'axe de roulis 24, qui se traduira sur l'image par des rotations dans un sens ou dans l'autre de la scène captée par la caméra.

Pour pallier cet inconvénient, l'invention propose, au lieu d'utiliser une caméra munie d'un objectif conventionnel, de munir cette caméra d'un objectif à champ hémisphérique de type "*fisheye*" couvrant un champ d'environ 180°, comme schématisé en 42 sur la Figure 2a.

L'image captée par la caméra munie de cet objectif *fisheye* subira certes les mêmes mouvements d'oscillation et de rotation qu'une caméra conventionnelle mais, de façon caractéristique de l'invention, on n'utilisera qu'une partie du champ capté par cette caméra en sélectionnant une fenêtre particulière, dite "fenêtre de capture", correspondant au secteur angulaire 36 capté par une caméra conventionnelle. Cette zone de capture sera déplacée en permanence en fonction des mouvements du drone tels que déterminés par la centrale inertielle de celui-ci, et en sens contraire du déplacement détecté.

En d'autres termes, on définit une "caméra virtuelle" par extraction d'une zone particulière de l'image hémisphérique, cette zone étant dynamiquement déplacée dans l'image hémisphérique en sens inverse des mouvements du drone afin d'annihiler les oscillations qui sinon seraient observées sur l'image.

Ainsi, dans le cas illustré Figure 2b où le drone plonge vers le bas d'un angle de tangage φ (flèche 38)

par rapport à la verticale V, la fenêtre de capture sera déplacée vers le haut (flèche 44) d'un angle de même valeur, ramenant ainsi dans la direction de l'horizon HZ l'axe central du secteur 36 de la "caméra virtuelle".

Comme on l'a illustré sur les figures, dans la mesure où les mouvements du drone vers l'avant sont plus fréquents que ceux vers l'arrière et que, d'autre part, les zones d'intérêt (terrain survolé) sont plutôt situées au-dessous du niveau du drone qu'au-dessus de celui-ci, il peut être avantageux d'incliner vers le bas l'axe principal Δ de l'objectif *fisheye* (par exemple d'un angle de site de -20°), de manière à couvrir un plus grand nombre de configurations d'évolution du drone et de faire en sorte que le secteur 36 correspondant à la zone de capture de la "caméra virtuelle" reste toujours dans le champ 42 de l'objectif *fisheye.*

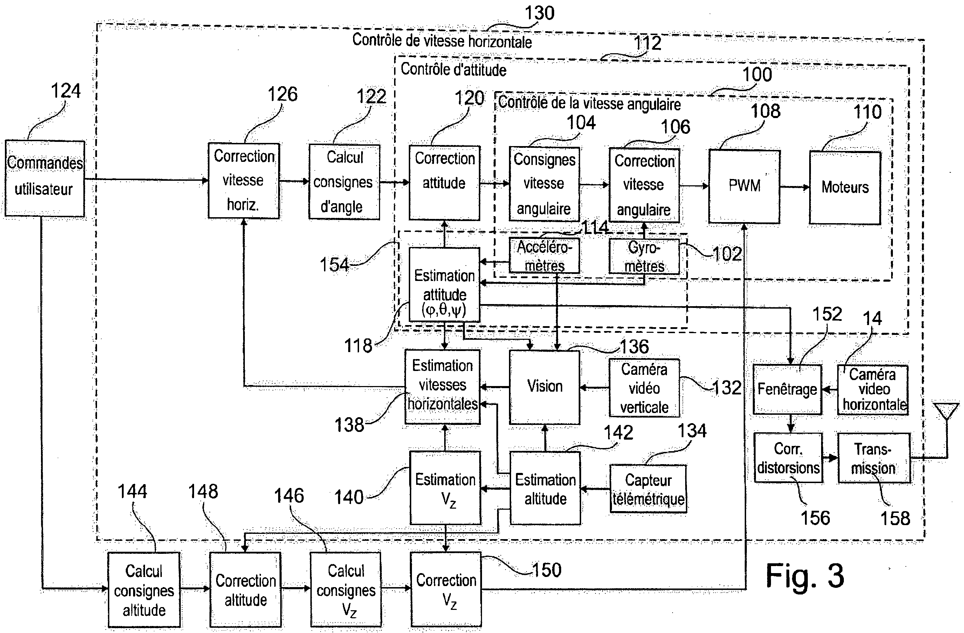

La Figure 3 est un schéma par blocs des différents organes de contrôle d'asservissement et de pilotage du drone, ainsi que de correction des déplacements de l'image selon la technique de l'invention.

On notera que, bien que ces schémas soient présentés sous forme de circuits interconnectés, la mise en oeuvre des différentes fonctions est essentiellement logicielle, cette représentation n'ayant qu'un caractère illustratif.

De façon générale, comme illustré Figure 3, le système de pilotage implique plusieurs boucles imbriquées pour le contrôle de la vitesse horizontale, de la vitesse angulaire de l'attitude du drone et des variations d'altitude, automatiquement ou sous commande de l'utilisateur.

La boucle la plus centrale est la boucle 100 de contrôle de la vitesse angulaire, qui utilise d'une part les signaux fournis par des gyromètres 102 et d'autre part une référence constituée par des consignes de vitesse angulaire 104. Ces informations sont appliquées en entrée d'un étage 106 de correction de la vitesse angulaire, qui pilote lui-même un étage 108 de contrôle des moteurs 110 afin de commander séparément le régime des différents moteurs pour corriger la vitesse angulaire du drone par l'action combinée des rotors entrainés par ces moteurs.

La boucle 100 de contrôle de la vitesse angulaire est imbriquée dans une boucle 112 de contrôle d'attitude, qui opère à partir des indications fournies par les gyromètres 102 et par des accéléromètres 114. Les données issues de ces capteurs sont appliquées à un étage 118 qui produit une estimation de l'attitude réelle du drone, appliquée à un étage 120 de correction d'attitude. Cet étage 120 compare l'attitude réelle du drone à des consignes d'angle générées par un circuit 122 à partir de commandes directement appliquées par l'utilisateur 124 et/ou à partir de données générées en interne par le pilote automatique du drone via le circuit 126 de correction de vitesse horizontale. Les consignes éventuellement corrigées appliquées au circuit 120 et comparées à l'attitude réelle du drone sont transmises par le circuit 120 au circuit 104 pour commander les moteurs de manière appropriée.

Enfin, une boucle de contrôle de vitesse horizontale 130 comporte une caméra video verticale 132 et un capteur télémétrique 134 faisant fonction d'altimètre. Un circuit 136 assure le traitement des images produites par la caméra verticale 132, en combinaison avec les signaux de l'accéléromètre 114 et du circuit d'estimation d'attitude 118, pour produire des données permettant d'obtenir une estimation des vitesses horizontales selon les deux axes de tangage et de roulis du drone, au moyen d'un circuit 138. Les vitesses horizontales estimées sont corrigées par l'estimation de vitesse verticale donnée par un circuit 140 et par une estimation de la valeur de l'altitude, donnée par le circuit 142 à partir des informations du capteur télémétrique 134.

Pour le contrôle des déplacements verticaux du drone, l'utilisateur 124 applique des commandes à un circuit de calcul de consignes d'attitude 144, consignes qui sont appliquées à un circuit de calcul de consignes de vitesse ascensionnelle $V_z$ 146 via le circuit de correction d'altitude 148 recevant la valeur d'attitude estimée donnée par le circuit 142. La vitesse ascensionnelle $V_z$ calculée est appliquée à un circuit 150 qui compare cette vitesse de consigne à la vitesse correspondante estimée par le circuit 140 et modifie en conséquence les données de commande des moteurs (circuit 108) en augmentant ou réduisant la vitesse de rotation simultanément sur tous les moteurs de façon à minimiser l'écart entre vitesse ascensionnelle de consigne et vitesse ascensionnelle mesurée.

En ce qui concerne plus spécifiquement la mise en oeuvre de l'invention, la caméra video frontale 14 délivre des données video brutes (données de pixel) appliquées à un circuit de fenêtrage 152 assurant la sélection des pixels utiles dans une zone de capture, dont la position dépend de l'attitude du drone à un instant donné, telle que déterminée par la centrale inertielle 154 (incluant les gyromètres 102, les accéléromètres 114 et le circuit d'estimation d'attitude 118).

Les données video extraites de la zone de capture sont délivrées à un circuit 156 de correction des distorsions géométriques introduites par l'objectif *fisheye*, de manière à produire des données video rectifiées, elles-mêmes délivrées à un circuit émetteur 158 assurant la transmission de l'image video au dispositif de télécommande distant tenu par l'utilisateur, notamment pour affichage sur l'écran de ce dispositif de télécommande et enregistrement éventuel de la séquence video.

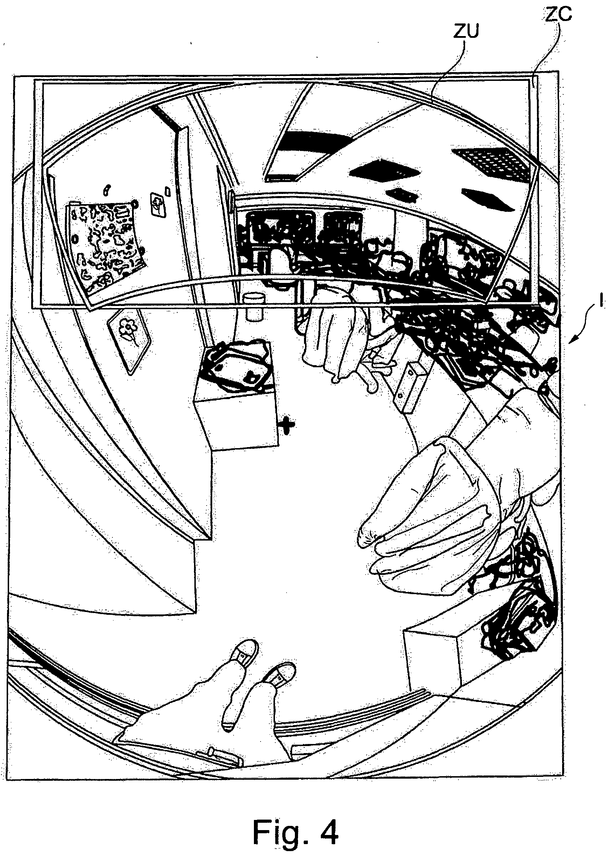

La Figure 4 montre un exemple de scène, telle que capturée par l'objectif *fisheye* et détectée sur le capteur de la caméra video.

Comme on peut le constater, cette image I comporte de très fortes distorsions géométriques, inhérentes à la couverture hémisphérique ou quasi-hémisphérique de l'objectif *fisheye*, qui est redressée sur la surface plane du capteur.

Seule une partie de l'image I produite par l'objectif *fisheye* est utilisée. Cette partie est déterminée en fonction i) de la direction dans laquelle est pointée la "caméra virtuelle", ii) du champ de vision de celle-ci (schématisé en 36 sur les Figures 2a et 2b) et iii) de son ratio largeur/hauteur. On définit ainsi une "zone de capture" ZC contenant des données de pixel brutes incluant la "zone utile" ZU correspondant au champ de la caméra virtuelle après compensation des distorsions géométriques introduites par l'objectif *fisheye.*

On notera qu'il n'est pas utile de capturer la totalité des pixels de l'image I formée sur le capteur de la caméra, mais seulement une fraction de ceux-ci (pour la zone de capture ZC).

À titre d'exemple, si l'on souhaite obtenir une image finale en qualité HD (1920 x 1080 pixels, soit 2 Mpixel pour la zone utile ZU), il est nécessaire de disposer au départ d'une image *fisheye* de très haute résolution pour pouvoir en extraire une vue HD de bonne qualité quelle que soit la direction dans laquelle pointe la caméra virtuelle, par exemple un capteur de résolution 14 Mpixel (4608 x 3288 pixels). Dans ces conditions, si l'on transférait la totalité de l'image I pour traitement, ceci correspondrait à un flux de données de pixel de 14 Mpixel pour chaque image, conduisant à une cadence d'images (*framerate*) de l'ordre de 6 images par seconde (ips) à cette résolution, ce qui serait insuffisant pour une séquence video fluide (imposant un *framerate* proche de 30 ips). On ne transfère donc que les données de pixel de la zone de capture ZC réellement nécessaire, par exemple une fenêtre de capture ZC d'environ 2 Mpixel, qui peut être rafraichie à une cadence de 30 ips sans difficulté particulière. On peut ainsi choisir un capteur de haute résolution tout en conservant un débit d'images élevé.

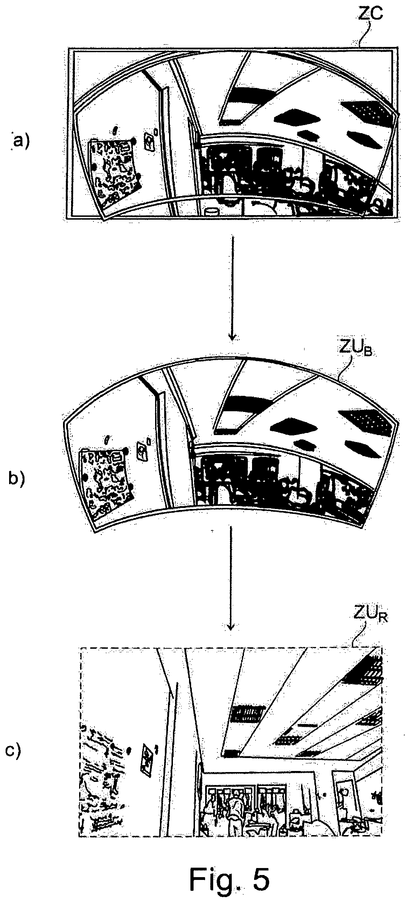

Sur la Figure 5 on a illustré les différents traitements opérés sur les données de pixel de la zone de capture ZC pour parvenir à l'image finale, compensée des distorsions géométriques.

À partir des données de pixel transférées de la zone de capture ZC (Figure 5a) le processus extrait les données de pixel de la zone utile brute $ZU_B$ (Figure 5b) et leur applique un maillage de triangles (technique en elle-même connue), qui permettra de redresser l'image par étirement de chaque triangle pour donner une image utile redressée $ZU_R$ (Figure 5c) avec des données de pixel rectifiées. En particulier, les lignes horizontales fortement courbées de l'image *fisheye* seront corrigées pour les rendre rectilignes et produire une image correspondant à une vision naturelle, dépourvue de distorsions géométriques.

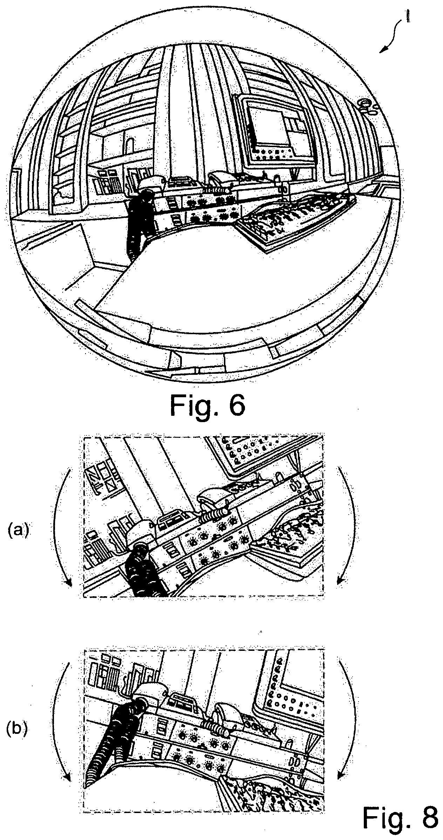

On va maintenant décrire, en référence aux Figures 6 à 10, la manière dont la fenêtre de capture ZC est modifiée et déplacée en fonction de l'orientation de la caméra virtuelle.

L'opération de fenêtrage implique en effet de déplacer la zone de capture (fenêtre d'acquisition des données de pixel, transférées depuis le capteur vers les circuits de traitement) pendant le transfert du flux video, en conservant un débit d'images élevé.

La Figure 6 donne un exemple d'image I délivrée par l'objectif *fisheye* de la caméra qui, comme illustré Figure 7, peut produire après extraction de la zone de capture et correction des distorsions géométriques diverses images rectifiées au centre $ZU_R(c)$, en haut $ZU_R(h)$, en bas $ZU_R(b)$, à gauche $ZU_R(g)$ ou à droite $ZU_R(d)$, toutes issues de la même image originale I.

Dans le cas de mouvements de roulis à gauche ou à droite, l'image subit des rotations comme cela est illustré en a) et b) sur la Figure 8. La correction de l'image ne pose pas de difficulté particulière, dans la mesure où il suffit de prévoir une zone de capture légèrement élargie et d'appliquer, après transfert des données de pixel, une correction d'image par rotation dans un sens ou dans l'autre, cette correction étant sans incidence notable sur le flux de données de pixel transférées du capteur au circuit de traitement.

En revanche les rotations du drone autour de l'axe de tangage 22 (lorsque le drone plonge vers l'avant ou, au contraire, se cabre) introduisent des déplacements relativement importants de la zone de capture ZC, vers le haut ou vers le bas autour d'une position centrale.

Avec une configuration conventionnelle où le capteur est orienté selon un format "paysage", ces rotations provoquent des déplacements de la zone de capture parallèlement à la direction de balayage de trame du capteur, ce qui a pour conséquence d'introduire des chutes importantes du débit de transfert des données de pixel du capteur vers les circuits de traitement, avec un risque important de chute du *framerate :* le changement de la séquence de balayage du capteur pour extraire la zone de capture ZC peut en effet conduire, du fait du ralentissement du débit de données de pixel, à une perte de certaines images de la séquence, avec une diminution corrélative du *framerate* pouvant atteindre 50 %.

Or les oscillations autour de l'axe de tangage sont les plus fréquentes (avance/recul du drone, phases d'accélération/ralentissement...).

Aussi, comme illustré Figure 9, pour compenser ces déplacements on choisit de tourner le capteur de 90° par rapport à une orientation conventionnelle, c'est-à-dire de le placer en configuration "portrait", de manière à privilégier les déplacements dans un sens perpendiculaire à la direction de balayage de trame $D_B$ (la position des lignes de balayage a été schématisée en $\ell_1$, $\ell_2$, $\ell_3$, $\ell_4$ ...) : dès lors, les déplacements des zones de capture liés à des mouvements en tangage ($ZC_h$ et $ZC_b$ autour de $ZC_0$) n'auront pas d'impact sur le débit des données de pixel délivrées par le capteur. En d'autres termes, dans cette configuration le capteur est orienté de manière que sa direction de balayage de trame $D_B$ soit parallèle à l'axe de tangage 22 du drone.

La Figure 10 est homologue de la Figure 9, pour un mouvement de la zone de capture ZC consécutive à un mouvement du drone autour de son axe de lacet 26. Si l'on oriente, comme dans le cas de la Figure 9, la caméra perpendiculairement à son positionnement "naturel", ces déplacements de la zone de capture ZC seront orientés dans le même sens que la direction de balayage

$D_B$ du capteur. Mais comme les amplitudes de ces variations sont beaucoup plus faibles que celles correspondant à des mouvements de tangage, l'incidence sur le débit de données de pixel délivrées par le capteur sera minime, et le risque de perdre des images sera faible.

Les Figures 11, 12 et 13 illustrent les déformations de type *wobble* et *jelly* observables sur l'image d'un damier, et qu'il convient de compenser en plus des distorsions géométriques de l'objectif *fisheye.*

L'effet "*jelly*", illustré Figure 12, apparaît en présence de rotations du drone de forte amplitude mais à relativement basse fréquence. Par exemple, dans le cas d'une rotation du drone de 100°/s et d'une capture video à 30 ips, entre le haut et le bas de l'image le drone aura tourné de 100 x 1/30 = 3,33°, ce qui correspond à un déplacement de plusieurs pixels sur l'image (environ un carreau du damier entre le haut et le bas de l'image dans l'exemple de la Figure 12). Ces artefacts sont particulièrement gênants sur des images mobiles, avec une distorsion permanente et variable des lignes droites.

Pour pallier ce phénomène, il est possible d'adapter à chaque ligne $\ell_i$ de l'image le traitement d'obtention de la zone utile ZU lors de l'étape de reprojection et de redressement de la zone de capture ZC, cette correction ligne par ligne permettant d'annuler l'artefact introduit par la rotation rapide du drone.

La Figure 13 illustre un autre type d'artefact dit "effet *wobble*", principalement causé par les vibrations du moteur : l'effet *wobble* est dû à des oscillations de haute fréquence et de faible amplitude, causées par les vibrations des moteurs, à la différence de l'effet *jelly*, qui est un effet de basse fréquence et de grande amplitude causé par les rotations du drone pour se déplacer. L'effet *wobble* est principalement corrigé par un amortissement mécanique approprié du support de la caméra, permettant de filtrer les vibrations des moteurs. Les résidus de ce filtrage mécanique peuvent être éliminés de la même manière que pour l'effet *jelly*, en utilisant les mesures des gyromètres et en appliquant les corrections ligne par ligne.

On va maintenant décrire, en relation aux Figures 14 et 15, le mécanisme permettant de compenser parfaitement, ligne par ligne, les effets *jelly* et *wobble* décrits plus haut.

Ces artefacts résultent du fait que la caméra est de type *rolling shutter* (et non pas *global shutter*), c'est-à-dire que les lignes constituant l'image ne sont pas acquises en même temps simultanément pour tous les pixels de l'image, mais les unes après les autres.

Les mouvements du drone ou les vibrations se produisant pendant la capture d'une image génèrent de ce fait au sein de cette image des déformations qui ne seront pas les mêmes d'une ligne à la suivante.

La correction ligne par ligne (correction "intra-image") des effets *jelly* et *wobble* implique de disposer de moyens d'acquisition de l'attitude précise du drone pour chacune de ces lignes : pour corriger précisément chaque ligne, il faut idéalement une mesure d'attitude par ligne, qui au surplus soit synchrone avec le capteur de la caméra.

Les gyromètres utilisés par le drone ne permettent toutefois pas de calculer l'attitude exacte du drone à une cadence correspondant à la durée de chaque ligne du capteur video. Il est cependant possible d'effectuer une acquisition des données gyrométriques à une fréquence allant jusqu'à 1 kHz, ce qui permet d'avoir plusieurs mesures par image et d'interpoler les attitudes du drone à chaque instant d'acquisition d'une ligne du capteur video.

La Figure 14 illustre, sous forme de schéma par blocs, les différents éléments contribuant à la synchronisation de la caméra video et des gyromètres : de façon caractéristique, les gyromètres 102 et la caméra video horizontale 14 sont pilotés par un circuit d'horloge commun 160, et les fréquences de fonctionnement respectives des gyromètres et de la caméra sont des sous-multiples de la fréquence CLK de cette horloge.

En d'autres termes, les gyromètres 102 et la caméra 14 sont configurés de sorte que :

$$F_{gyro} = K.F_{cam}$$

$F_{gyro}$ étant la fréquence d'acquisition des gyromètres (typiquement $F_{gyro}$ = 990 Hz),
$F_{cam}$ étant la fréquence d'acquisition des images par la caméra video (typiquement $F_{cam}$ = 30 Hz, et
$K$ étant un entier positif (typiquement, $K$ = 33).

Le fait que $K$ soit un entier et que l'horloge de base soit la même pour les gyromètres et la caméra, assure qu'il y aura toujours $K$ échantillons du signal gyrométrique $S_{gyro}$ par image $S_{cam}$, sans aucune dérive, les mesures d'angle tombant toujours au même instant.

Toutefois, si ce mécanisme assure que le signal $S_{gyro}$ délivré par le capteur gyrométrique et le signal $S_{cam}$ délivré par la caméra 14 sont synchrones, il ne donne aucune garantie sur la concordance de phase de ces deux signaux.

En effet, les acquisitions video et les acquisitions gyrométriques sont déclenchées par logiciel, et il n'est donc pas certain que les deux démarrent en même temps ni que l'intervalle de temps séparant les deux démarrages soit constant d'un drone à l'autre, ou même d'une séquence de pilotage à l'autre pour un même drone.

Ces signaux $S_{cam}$ et $S_{gyro}$ ont été illustrés sur la Figure 15 dans deux cas différents (a) et (b) : pour le signal video $S_{cam}$, une nouvelle image de ligne est disponible à chaque front descendant, et pour le signal gyrométrique $S_{gyro}$ les fronts descendants correspondent également à la disponibilité d'une nouvelle donnée angulaire.

Si l'on observe ces chronogrammes, on constate que le signal gyrométrique $S_{gyro}$ ne "glisse" pas par rapport au signal video $S_{cam}$, ce qui signifie que lorsqu'une nouvelle image est disponible, il s'écoule toujours le même intervalle de temps avant que le gyromètre délivre une nouvelle donnée. En revanche, cet intervalle de temps varie d'un drone à l'autre, et d'une séquence de pilotage à l'autre, car les capteurs gyrométriques n'ont pas été démarrés en même temps que la caméra video.

Pour garantir une synchronisation parfaite, l'invention propose, de façon caractéristique, d'utiliser un composant matériel (*hardware*) 170, qui mesure l'intervalle de temps $\Delta$ entre les signaux gyrométriques et video $S_{gyro}$ et $S_{cam}$ avec une grande précision. On notera qu'une mesure unique est suffisante, puisque les horloges ont été réglées de manière à ce qu'elles ne dérivent pas.

Les deux mécanismes que l'on vient de décrire (horloge 160 commune et circuit *hardware* 170 de mesure du déphasage) permettent de relier dans le temps les signaux gyrométriques et video avec une très grande précision, à un cycle d'horloge près.

L'horloge système 160 fonctionnant à plusieurs mégahertz, ceci représente quelques nanosecondes d'erreur sur le calage entre les signaux video et gyrométriques, ce qui est très faible et permet d'opérer une correction extrêmement précise et efficace des effets *jelly* et *wobble*.

En revanche, en l'absence de ce mécanisme il aurait été nécessaire de relever par logiciel l'instant de délivrance de chaque nouvelle donnée du gyromètre et de chaque nouvelle image acquise. Une telle méthode serait beaucoup moins précise et plus irrégulière car sensible au temps de réaction du système, et ne procurerait qu'une précision de l'ordre de 100 microsecondes.

## Revendications

1.   Un drone à voilure tournante (10), comprenant :

- une caméra (14), comportant un objectif à champ hémisphérique de type *fisheye* pointant dans une direction fixe ($\Delta$) par rapport au corps du drone, ainsi qu'un capteur numérique recueillant l'image (I) formée par l'objectif et délivrant des données de pixel brutes ;
- des moyens de traitement d'image (156), recevant en entrée les données de pixel brutes et délivrant en sortie des données de pixel rectifiées, compensées des distorsions géométriques introduites par l'objectif *fisheye* ;
- des moyens de délivrance en sortie (158) des données de pixel rectifiées, pour transmission à un dispositif d'affichage ou d'enregistrement video ;
- une centrale inertielle (154), apte à mesurer les angles d'Euler ($\varphi, \theta, \psi$) caractérisant l'attitude du drone par rapport à un repère terrestre absolu ; et

- des moyens d'asservissement (152), recevant en entrée au moins un angle d'Euler délivré par la centrale inertielle (154), et aptes à fenêtrer les données de pixel délivrées en sortie par les moyens de délivrance en fonction de changements d'attitude du drone détectés par la centrale inertielle,

**caractérisé en ce que** :

- le capteur numérique est un capteur à balayage délivrant ligne par ligne lesdites données brutes de pixel ;
- le drone comporte en outre des moyens extracteurs (152) d'une fraction des pixels de l'image formée sur le capteur, ces moyens extracteurs :

· recevant en entrée un signal de sélection définissant sur l'étendue du capteur la position d'une zone de capture (ZC) de dimension réduite, et
· ne transférant vers lesdits moyens de traitement d'image (156), pour compensation des distorsions géométriques, que lesdites données de pixel brutes correspondant à la zone de capture de dimension réduite ;

- les moyens d'asservissement (152) sont des moyens aptes à modifier de façon dynamique ledit signal de sélection, définissant l'étendue de ladite zone de capture (ZC) des moyens extracteurs, dans un sens opposé de celui d'un changement d'attitude du drone détecté par la centrale inertielle et **caractérisé par** une variation correspondante dudit au moins un angle d'Euler.

2. Le drone de la revendication 1, dans lequel les moyens d'asservissement sont aptes à modifier le signal de sélection de manière que les données de pixel délivrées par les moyens extracteurs correspondent à une image centrée sur l'horizon, ou centrée sur une orientation fixe par rapport à l'horizon.

3. Le drone de la revendication 1, dans lequel la caméra est montée dans le drone de manière que la direction de balayage de trame ($D_B$) du capteur numérique soit orientée parallèlement à l'axe de tangage (22) du drone.

4. Le drone de la revendication 1, dans lequel ledit au moins un angle d'Euler est un angle de tangage ($\varphi$) du drone, et les moyens d'asservissement sont aptes à modifier le signal de sélection de manière à translater la zone de capture dans une première direction, parallèle à un axe principal du capteur.

5. Le drone de la revendication 4, dans lequel ledit au moins un angle d'Euler est un angle de lacet ($\psi$) du drone, et les moyens d'asservissement sont aptes à modifier le signal de sélection de manière à translater la zone de capture dans une seconde direction, perpendiculaire à ladite première direction.

6. Le drone de la revendication 1, dans lequel les moyens de traitement d'image (156) sont aptes à appliquer à chaque ligne ($\ell_i$) du capteur une correction additionnelle propre à compenser les déplacements relatifs de pixels d'une ligne à la suivante induits par des rotations du drone autour d'un axe de lacet, de tangage et/ou de roulis.

7. Le drone de la revendication 6, dans lequel :

- la caméra (14) est une caméra de type *rolling shutter* délivrant des données video ligne par ligne ;
- la caméra (14) et les capteurs gyrométriques (102) de la centrale inertielle (154) sont pilotés par une horloge commune (160) ; et
- la fréquence ($F_{gyro}$) d'acquisition des capteurs gyrométriques (102) est un multiple ($K$) de la fréquence ($F_{cam}$) de délivrance des données video de la caméra (14).

8. Le drone de la revendication 7, comprenant en outre un circuit matériel (170) apte à :

- comparer le signal ($S_{gyro}$) délivré par les capteurs gyrométriques (102) avec le signal ($S_{cam}$) délivré par la caméra (14) ;
- déterminer la valeur du déphasage entre ces signaux respectifs ; et
- appliquer cette valeur de déphasage aux moyens de traitement d'image (156) de manière à déclencher de manière synchrone ladite correction additionnelle appliquée à chaque ligne du capteur pour compenser les déplacements relatifs de pixels d'une ligne à la suivante.

**Patentansprüche**

1. Drehflügel-Drohne (10), die enthält:

- eine Kamera (14), die ein hemisphärisches Fischaugenobjektiv, das in eine festgelegte Richtung (Δ) bezüglich des Körpers der Drohne weist, sowie einen digitalen Sensor enthält, der das vom Objektiv geformte Bild (I) auffängt und Rohpixeldaten liefert;
- Bildverarbeitungseinrichtungen (156), die am Eingang die Rohpixeldaten empfangen und am Ausgang korrigierte Pixeldaten liefern, bei denen die vom Fischaugenobjektiv eingeführten geometrischen Verzerrungen kompensiert sind;
- Ausgangs-Liefereinrichtungen (158) der korrigierten Pixeldaten zur Übertragung zu einer Anzeige- oder Videoaufzeichnungsvorrichtung;
- ein Trägheitsnavigationssystem (154), das die Euler-Winkel ($\varphi$, $\theta$, $\psi$) messen kann, die die Fluglage der Drohne bezüglich eines absoluten terrestrischen Bezugssystems kennzeichnen; und
- Regeleinrichtungen (152), die am Eingang mindestens einen vom Trägheitsnavigationssystem (154) gelieferten Euler-Winkel empfangen und fähig sind, die am Ausgang durch die Liefereinrichtungen gelieferten Pixeldaten abhängig von Fluglageänderungen der Drohne in Fenster aufzuteilen, die vom Trägheitsnavigationssystem erkannt werden, **dadurch gekennzeichnet, dass**:
- der digitale Sensor ein Abtastsensor ist, der die Pixelrohdaten Zeile für Zeile liefert;
- die Drohne außerdem Extraktoreinrichtungen (152) eines Bruchteils der Pixel des im Sensor geformten Bilds aufweist, wobei diese Extraktoreinrichtungen:

. am Eingang ein Auswahlsignal empfangen, das über den Bereich des Sensors die Position einer Erfassungszone (ZC) verringerter Abmessung definiert, und
. zu den Bildverarbeitungseinrichtungen (156) zur Kompensation der geometrischen Verzerrungen nur die Rohpixeldaten übertragen, die der Erfassungszone verringerter Abmessung entsprechen;

- die Regeleinrichtungen (152) Einrichtungen sind, die das Auswahlsignal, das den Bereich der Erfassungszone (ZC) der Extraktoreinrichtungen definiert, in einer Richtung entgegengesetzt zu derjenigen einer Fluglageänderung der Drohne dynamisch ändern können, die vom Trägheitsnavigationssystem erkannt wird und durch eine entsprechende Variation des mindestens einen Euler-Winkels gekennzeichnet ist.

2. Drohne nach Anspruch 1, wobei die Regeleinrichtungen fähig sind, das Auswahlsignal so zu ändern, dass die von den Extraktoreinrichtungen gelieferten Pixeldaten einem auf den Horizont zentrierten oder auf eine feststehende Ausrichtung bezüglich des Horizonts zentrierten Bild entsprechen.

3. Drohne nach Anspruch 1, wobei die Kamera so in die Drohne montiert ist, dass die Rahmenabtastrichtung ($D_B$) des digitalen Sensors parallel zur Nickachse (22) der Drohne ausgerichtet ist.

4. Drohne nach Anspruch 1, wobei der mindestens eine Euler-Winkel ein Nickwinkel ($\varphi$) der Drohne ist, und die Regeleinrichtungen fähig sind, das Auswahlsignal so zu ändern, dass die Erfassungszone in eine erste Richtung parallel zu einer Hauptachse des Sensors translatorisch verschoben wird.

5. Drohne nach Anspruch 4, wobei der mindestens eine Euler-Winkel ein Gierwinkel ($\psi$) der Drohne ist, und die Regeleinrichtungen fähig sind, das Auswahlsignal so zu ändern, dass die Erfassungszone in eine zweite Richtung lotrecht zur ersten Richtung translatorisch verschoben wird.

6. Drohne nach Anspruch 1, wobei die Bildverarbeitungseinrichtungen (156) fähig sind, an jede Zeile ($\ell_i$) des Sensors eine zusätzliche Korrektur anzuwenden, die geeignet ist, die relativen Verschiebungen der Pixel von einer Zeile zur anderen zu kompensieren, die durch Drehungen der Drohne um eine Gier-, Nick und/oder Wankachse induziert werden.

7. Drohne nach Anspruch 6, wobei:

- die Kamera (14) eine Kamera der Art Rolling Shutter ist, die Zeile für Zeile Videodaten liefert;
- die Kamera (14) und die Kreiselsensoren (102) des Trägheitsnavigationssystems (154) von einem gemeinsamen Taktgeber (160) gesteuert werden; und
- die Erfassungsfrequenz ($F_{gyro}$) der Kreiselsensoren (102) ein Vielfaches (K) der Lieferfrequenz ($F_{cam}$) der Videodaten der Kamera (14) ist.

8. Drohne nach Anspruch 7, die außerdem eine materielle Schaltung (170) enthält, die fähig ist:

- das von den Kreiselsensoren (102) gelieferte Signal ($S_{gyro}$) mit dem von der Kamera (14) gelieferten Signal ($S_{cam}$) zu vergleichen;
- den Wert der Phasenverschiebung zwischen diesen jeweiligen Signalen zu bestimmen; und
- diesen Phasenverschiebungswert an die Bildverarbeitungseinrichtungen (156) anzuwenden, um synchron die zusätzliche Korrektur auszulösen, die an jede Zeile des Sensors angewendet wird, um die relativen Verschiebungen von Pixeln von einer Zeile zur nächsten zu kompensieren.

**Claims**

1. A rotary-wing drone (10), comprising:

- a camera (14), including a hemispherical field lens of the fisheye type pointing in a fixed direc-

tion ($\Delta$) with respect to the drone body, as well as a digital sensor collecting the image (I) formed by the lens and delivering raw pixel data;

- image processing means (156), receiving as an input the raw pixel data and delivering as an output corrected pixel data, compensated for the geometric distortions introduced by the fisheye lens;

- means (158) for delivering as an output corrected pixel data, for transmission to a video recording or display device;

- an inertial unit (154), adapted to measure the Euler angles ($\varphi$, $\theta$, $\psi$) characterizing the attitude of the drone with respect to an absolute terrestrial system; and

- automatic control means (152), receiving as an input at least one Euler angle delivered by the inertial unit (154), and adapted to window the pixel data delivered as an output by the delivery means as a function of changes of attitude of the drone detected by the inertial unit, **characterized in that**:

    - the digital sensor is a scanning sensor delivering said raw pixel data line by line ;

    - the drone further includes means (152) for extracting a fraction of the pixels from the image formed on the sensor, these extractor means:

        • receiving as an input a selection signal defining over the sensor extent the position of a capture area (ZC) of reduced size, and

        • transferring to said image processing means (156), for compensation for the geometric distortions, only said raw pixel data corresponding to the capture area of reduced size;

    - the automatic control means (152) are means adapted to modify dynamically said selection signal, defining the extent of said capture area (ZC) of the extractor means, in a direction opposite to that of a change of attitude of the drone detected by the inertial unit and **characterized by** a corresponding variation of said at least one Euler angle.

2. The drone of claim 1, wherein the automatic control means are adapted to modify the selection signal so that the pixel data delivered by the extractor means correspond to an image centred on the horizon, or centred on a fixed orientation with respect to the horizontal.

3. The drone of claim 1, wherein the camera is mounted in the drone so that the frame scanning direction ($D_B$) of the digital sensor is oriented parallel to the pitch axis (22) of the drone.

4. The drone of claim 1, wherein said at least one Euler angle is an pitch angle ($\varphi$) of the drone, and the automatic control means are adapted to modify the selection signal so as to translate the capture area in a first direction, parallel to a main axis of the sensor.

5. The drone of claim 4, wherein said at least one Euler angle is an yaw angle ($\psi$) of the drone, and the automatic control means are adapted to modify the selection signal so as to translate the capture area in a second direction, perpendicular to said first direction.

6. The drone of claim 1, wherein the image processing means (156) are adapted to apply to each line (,i) of the sensor an additional correction able to compensate for the relative displacements of pixels from one line to the next one, induced by rotations of the drone about a yaw, pitch and/or roll axis.

7. The drone of claim 6, wherein:

    - the camera (14) is a camera of the rolling shutter type, delivering video data line by line;
    - the camera (14) and the gyrometric sensors (102) of the inertial unit (154) are piloted by a common clock (160); and
    - the frequency ($F_{gyro}$) of acquisition of the gyrometric sensors (102) is a multiple ($K$) of the frequency ($F_{cem}$) of delivery of the video data of the camera (14).

8. The drone of claim 7, further comprising a hardware circuit (170) adapted to:

    - compare the signal ($S_{gyro}$) delivered by the gyrometric sensors (102) with the signal ($S_{cam}$) delivered by the camera (14);
    - determine the value of the phase shift between these respective signals; and
    - apply this phase-shift value to the image processing means (156) so as to trigger synchronously said additional correction applied to each line of the sensor to compensate for the relative displacements of pixels from one line to the next one.

Fig. 1

Fig. 2a

Fig. 2b

Fig. 3

Fig. 4

ZC

a)

ZU_B

b)

ZU_R

c)

Fig. 5

Fig. 6

(a)

(b)

Fig. 8

Fig. 7

Fig. 9

Fig. 10

Fig. 11

$D_B$

Fig. 12

Fig. 13

Fig. 14

Fig. 15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010061099 A2
- EP 2364757 A1, Parrot SA

- EP 2613214 A1, Parrot

**Littérature non-brevet citée dans la description**

- **MIYAUCHI R et al.** Compact Image Stabilization System Using Camera Posture Information. *Journal of Field Robotics,* 2008, vol. 25 (4-5), 268-283
- **MIYAUCHI R et al.** Development of Omni-Directional Image Stabilization System Using Camera Posture Information. *Proceedings of the 2007 IEEE International Conference on Robotics and Biomimetics,* 15 Décembre 2007, 920-925

- **SHIROMA N et al.** Compact Image Stabilization System for Small-Sized Humanoid. *Proceedings of the 2008 IEEE International Conference on Robotics and Biomimetics,* 21 Février 2009, 149-154